# EUROPÄISCHE PATENTSCHRIFT

(11) **EP 0 470 093 B1**
(45) Veröffentlichungstag und Bekanntmachung des Hinweises auf die Patenterteilung: **03.11.1993**
(21) Anmeldenummer: 90906123.6
(22) Anmeldetag: 21.04.1990
(51) Int. Cl.: C02F 1/76, C02F 1/78

(54) **VERFAHREN ZUM AUFBEREITEN VON WASSER, INSBESONDERE BADEWASSER**
METHOD OF PROCESSING WATER, IN PARTICULAR BATH WATER
PROCEDE DE TRAITEMENT DE L'EAU, EN PARTICULIER DE L'EAU DE BAIN

(30) Priorität: 28.04.1989 DE 3914024
(43) Veröffentlichungstag der Anmeldung: 12.02.1992
(73) Patentinhaber: Bachhofer, Bruno, D-88213 Ravensburg (DE); Locher, Anton, D-88214 Ravensburg (DE)
(72) Erfinder: Bachhofer, Bruno, D-88213 Ravensburg (DE); Locher, Anton, D-88214 Ravensburg (DE)
(74) Vertreter: Patentanwälte Eisele, Otten & Roth
(86) Internationale Anmeldenummer: DE9000296
(87) Internationale Veröffentlichungsnummer: WO9013520

(56) Entgegenhaltungen:
- EP-A- 0 027 278
- EP-A- 0 237 793
- DE-A- 2 450 731
- DE-A- 2 848 178
- FR-A- 2 511 359
- Firmendruckschrift "Wasser-Aufbereitung mit dem Oxon-Oxidator" Hydro-Elektrik GmbH, Anglestr. 50, D-7980 Ravensburg 19, 1985, see pages 34, 72 and 64

## Beschreibung

Die Erfindung betrifft ein Verfahren zum Aufbereiten von in einem Kreislauf geführtem Wasser, insbesondere Badewasser und Wasser in Luftbehandlungsanlagen, wobei das Wasser mit Ozon behandelt, gefiltert und mit einem Flockungsmittel sowie einem Ozon reduzierenden Halogen, insbesondere Brom und/oder Jod, versetzt wird.

Ein bekanntes Verfahren dieser Art ist in der Firmendruckschrift "Wasser-Aufbereitung mit dem Ozon-Oxidator" der Hydro-Elektrik GmbH, Angelestraße 50, D-7980 Ravensburg 19, aus dem Jahre 1985 als Beispiel 4 auf S. 64 schematisch dargestellt. Das Flockungsmittel wird mittels einer Dosierpumpe in regelmäßigen Stößen oder kontinuierlich in Strömungsrichtung vor dem Sandfilter in das Wasser eingebracht. Im automatischen Betrieb ist die Dosierpumpe eingeschaltet, solange die Wasserumwälzpumpe läuft. Im Filter wird das gesamte eingebrachte Flockungsmittel samt den durch seine Wirkung gebundenen korpuskulären Teilchen zurückgehalten. Anschließend wird das Wasser im Reaktionsgefäß einer Behandlungsanlage mit Ozon behandelt und fließt dann in das Becken zurück. Als Halogen wird dem Wassr bei der Beckenerstfüllung einmalig Bromwasserstoff beigegeben. Der gewählte Bromgehalt bleibt dann praktisch konstant. Nur wenn ein Teil des Wassers durch Frischwasser ergänzt worden ist, beispielsweise der zum Filterrückspülen verwendete Teil, wird dementsprechend Bromwasserstoff nachdosiert.

Die DE-A1-28 48 178 zeigt ebenfalls ein Wasseraufbereitungssystem, bei dem ein Wasserquantum durch eine Ozonbehandlungseinheit zirkuliert und mittels einer während der Ozonbehandlung ständig laufenden Dosiervorrichtung ein Aufbereitungshilfsmittel zudosiert wird, das Brom enthält. Es handelt sich hier um ein offenes System, geeignet z.B. für Trinkwasser, wobei das Rohwasser in dem Maße in den Behandlungskreislauf einströmt, wie es diesem mittels einer Reinwasserpumpe entzogen wird, die vom Redox-Potential gesteuert ist.

Aus der EP-A2- 0 237 793 ist ein Verfahren zur Aufbereitung von Badebeckenwasser unter Verwendung von Chlor und Ozon bekannt. Die Ozonbehandlung findet in einem Bypass statt, der einen kleinen Anteil des über Filter umgewälzten Wassers abzweigt. Es wird beschrieben, daß die Chloreinspeisung sowohl nach Art der Chemikalie als auch der Technik der Chlorzudosierung konventionell ist.

Nachteilig ist, daß die chemischen Aufbereitungs-Hilfsmittel unabhängig vom tatsächlichen Bedarf in das Wasser eingebracht werden. Während nämlich die Belastung des Wassers sich laufend ändert, beispielsweise durch die organischen Substanzen jeder Art, die von unregelmäßig hinzukommenden badenden Menschen eingebracht werden, bleibt die Dosierung der Aufbereitungs-Hilfsmittel konstant. Die Einstellwerte entsprechen der zu erwartenden Höchstbelastung und sind daher im Normalbetrieb zu hoch. Beispielsweise führt überschüssig zugegebenes Flockungsmittel zur Erhöhung des Filterwiderstandes oder gar zur Filterverstopfung und zwingt zur vorzeitigen Filterrückspülung. Diese aber erfordert einen unnötigen Frischwasserverbrauch und belastet das Abwassersystem.

Bekanntlich reagiert das im Wasser vorhandene Bromid mit Ozon nach der Gleichung

O₃ + Br⁻ = O₂ + BrO⁻.

Dabei entstehen Hypobromit (BrO⁻) und vermutlich auch höherwertige unbeständige Bromoxide wie z. B. BrO₂ und BrO₃, die als Desinfektionsmittel wirken und mit hohen Redox-Potentialen einhergehen. Indes hat sich gezeigt, daß sowohl zu hohe als auch zu niedrige Redox-Potentiale von Nachteil sind.

Der Erfindung liegt die Aufgabe zugrunde, ein Verfahren vorzuschlagen, das die organische Belastung schnell abbaut und eine stets einwandfreie chemisch-physikalische sowie hygienische Beschaffenheit des Kreislaufwassers bei geringstmöglicher Zugabe von Aufbereitungs-Hilfsmitteln garantiert. Darüber hinausgehend soll das vorzuschlagende Verfahren nicht nur die geltenden Normen und Vorschriften erfüllen, welche die Wasserbeschaffenheit betreffen, sondern gleichzeitig zu erwartende verschärfte Normen und Umweltvorschriften berücksichtigen. Hierzu gehört im besonderen die Reduzierung der Konzentration der Trihalomethane (THM) im Badewasser auf Werte unter 0,01 mg/l.

Zur Lösung dieser Aufgabe wird ausgehend von dem einleitend bezeichneten Verfahren erfindungsgemäß vorgeschlagen, daß das Redox-Potential am Eingang der Aufbereitungsanlage laufend gemessen wird, daß das Einbringen sowohl des Flockungsmittels als auch des Halogens in der Weise vom Redox-Potential abhängig geregelt wird, daß diese Aufbereitungs-Hilf smittel eingebracht werden, wenn das Redox-Potential sinkt, daß die Aufbereitungs-Hilfsmittel in oder bezüglich der Strömungsrichtung vor demjenigen räumlichen Bereich der Wasserführung eingebracht werden, in welchem das Ozon mit den Wasserinhaltsstoffen reagiert und daß das Wasser nach diesem Bereich gefiltert wird.

Das Redox-Potential des Rohwassers, im Rücklauf von der Kontaminierungsstelle gemessen, ist eine zuverlässig meßbare Kenngröße für das Keimtötungsvermögen des Kreislaufwassers. Ein Abfallen der Redox-Potential-Kurve weist grundsätzlich auf einen bezogen auf die augenblickliche Wasserbelastung zu geringen Desinfektionsmittelgehalt hin. Durch die Kopplung der Menge des zugegebenen Flockungsmittels und/oder Halogens an diese Kenngröße in dem Sinne, daß diese Aufbereitungs-Hilfsmittel nur zugegeben werden, wenn das Redox-Potential sinkt, oder sich unterhalb einer bestimmten Schaltschwelle befindet, wird der Verbrauch der Chemikalien auf das erforderliche Minimum beschränkt. Die Zugabe erfolgt nur bei Bedarf. Das Flockungsmittel fördert die Abscheidung korpuskulärer Belastungsstoffe. Mit der Nachspeisung von Bromid bzw. Jodid wird unter Einwirkung von Ozon auch mehr BrO⁻ bzw. JO⁻ erzeugt und damit das Desinfektionsmittel-Defizit behoben. Nach neuesten Erkenntnissen kann es sogar vorteilhaft sein, bei ansteigendem Redox-Potential auch nach dem Überschreiten der Schaltschwelle und bei stillgesetztem Ozonerzeuger noch eine gewisse Zeit lang Aufbereitungs-Hilfsmittel zuzugeben, um den Anstieg des Redox-Potentials zu verzögern.

Das Zusammentreffen mit Brom und/oder Jod im Wasser verbessert erfahrungsgemäß die kolloidbildende Wirkung des Flockungsmittels erheblich. Dabei scheint von besonderer Bedeutung zu sein, daß das Zusammentreffen dieser Substanzen im Oxidationsbereich stattfindet, d. h. in jenem räumlichen Bereich der Wasserführung, in welchem das Ozon mit dem Wasser vermischt wird und mit dessen Inhaltsstoffen reagiert. Das bedeutet dann auch gleichzeitig, daß die Flocken nicht vor der Ozonbehandlungsanlage weggefiltert werden, sondern danach. Der Filter ist also vorzugsweise in Strömungsrichtung hinter dem Ozonerzeuger bzw. dem Vermischer anzuordnen. Die erzielbare Beschleunigung beim Abbau der organischen Belastung ist erstaunlich. In Versuchen wurden vergleichbare Ergebnisse in 1/10 der bisher benötigten Zeit erreicht.

Weiter hat sich vorteilhafterweise gezeigt, daß es möglich ist, auch bei Verwendung von Hypobromit und/oder Hypojodit als Desinfektionsmittel den Gehalt an Trihalomethanen, insbesondere des Tribrommethans (CHBr₃), sehr stark zu reduzieren, sogar unter 0,01 mg/l zu halten, wenn ein Redox-Potential von mindestens 775 mV bei einem auf 28° C temperierten Wasser eingehalten wird.

Ein weiterer Vorteil der Erfindung ist die starke Herabsetzung der Trübungswerte des aufbereiteten Wassers. So hat z. B. bei einem praktischen Versuch nach zehnstündigem Badebetrieb die Trübung des Reinwassers den erstaunlich tiefen TE/F-Wert von 0,02 nicht überschritten, d. h. daß die Trübung auf 1/10 des nach DIN 19 643 vorgeschriebenen Werts sank.

Um das Einbringen von Flockungsmittel und Halogen in das Wasser besonders wirkungsvoll an den Bedarf zu koppeln, kann es vorteilhaft sein, die einzelnen Zugabemengen pro Zeiteinheit variabel und vom Momentanwert des Redox-Potentials abhängig zu machen. Zum Beispiel kann eine Steueranordnung vorgesehen werden, welche bewirkt, daß die Zugabemengen mit steigendem Redox-Potential kleiner werden. Vorzugsweise werden die einzelnen Aufbereitungs-Hilfsmittel in einem konstanten Mengenverhältnis zueinander dem Wasser beigegeben. Besonders günstig ist es, wenn das Mengenverhältnis der Wirkstoff Al₂O₃ und Br⁻ etwa in einem Bereich von 1 : 0,3 bis 1 : 1 liegt.

Das konstante Mengenverhältnis wird am einfachsten dadurch erreicht, daß eine zuvor hergestellte Mischung mehrerer Aufbereitungs-Hilfsmittel, insbesondere eine Mischung aus einem Flockungsmittel und einer Halogenverbindung, in das Wasser eingebracht wird. Dadurch ergeben sich einmal erhebliche Vorteile bei der Lagerhaltung der Mischung, die nicht als Gefahrengut einzustufen ist. Die Mischung kann mit einer einzigen Dosierpumpe und somit unter erheblicher Verringerung des apparativen Aufwandes eingebracht werden. Außerdem erhöht sich dabei die Betriebssicherheit insofern, als die Mischung nicht zum Auskristallisieren neigt und somit Störungen durch Verkrusten der Ventile und Pumpen ausgeschlossen sind.

Insbesondere eignet sich ein gut auflösendes Meßwertverarbeitungssystem, z. B. eine speicherprogrammierbare Steuerung, als Regelanordnung. Dazu wird weiter vorgeschlagen, daß auch die Behandlung des Wassers mit Ozon, nämlich die erzeugte Ozonmenge, in Abhängigkeit vom Redox-Potential geregelt wird, wobei die Schaltschwelle für die Ozonbehandlung höher liegt als die Schaltschwelle für das Einbringen von Aufbereitungs-Hilfsmittel. Die optimale Funktion der Regeleinrichtung setzt ferner ein schnell reagierendes Redox-Meßsystem voraus, was durch die entsprechende Wahl der Meßkreis-Impedanz unschwer zu realisieren ist.

Es wird vorgeschlagen, daß ein Flockungsmittel auf der Basis von Polyaluminiumchlorid und Tonerde (Al₂O₃) verwendet wird. Diesem wird vorzugsweise eine Halogenverbindung in Form von Natriumbromid beigemischt. Ein bevorzugtes Hilfsmittel für die Wasseraufbereitung mit Ozon ist eine Mischung aus einem Teil Natriumbromid und fünf bis zwanzig Teilen eines handelsüblichen Polyaluminiumchlorid-Flockungsmittels, das einen Gehalt von Tonerde von etwa 10 % aufweist. Es hat sich gezeigt, daß das Flockungsmittel (PAC) einen pH-Wert zwischen 3,0 und 3,2 aufweist und daß dieser bei Zugabe der NaBr-Kristalle unverändert bleibt.

Ein Ausführungsbeispiel der Erfindung wird nachfolgend anhand der Zeichnung näher erläutert. Im einzelnen zeigt
- Fig. 1: ein Schema einer Badewasser-Aufbereitungsanlage und
- Fig. 2: ein Schaubild zur Erklärung der Wirkungsweise.

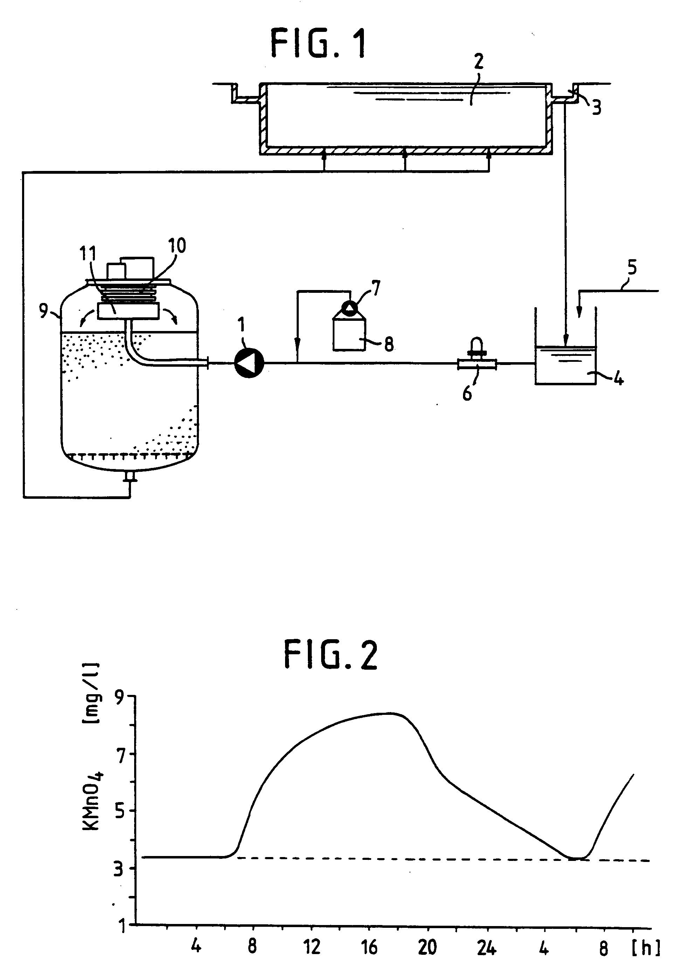

Gemäß Fig. 1 wird das Wasser mittels einer Pumpe 1 umgewälzt. Es tritt am Boden in ein Badebecken 2 ein und gelangt über dessen Überlaufrinne 3 in ein Ausgleichsbecken 4. Hier wird über eine Leitung 5 bei Bedarf Frischwasser zugeführt. Normalerweise ist diese Frischwasserzuleitung geschlossen. Nach dem Ausgleichsbehälter 4 folgt eine Meßstelle 6. Hier wird das Redox-Potential des Rohwassers gemessen. Anschließend wird mittels einer Dosierpumpe 7 aus einem Vorratsbehälter 8 ein flüssiges Aufbereitungs-Hilfsmittel-Gemisch in die Umwälzleitung eingebracht. Es besteht aus einer Polyaluminiumchlorid-Flüssigkeit mit einem Anteil Natriumbromid. Sodann tritt das Wasser über die Pumpe 1, welche das Zugabemittel intensiv mit dem Wasser vermischt, in eine sog. Kompaktanlage zur Ozonbehandlung ein. Diese besteht aus einem Filterbehälter 9, unter dessen Deckel ein Platten-Ozongenerator 10 und ein Vermischer 11 angeordnet ist. Der Filterbehälter 9 hat einen perforierten Innenboden und ist zu dreiviertel mit Sand gefüllt. Das Wasser tritt unten am Filterbehälter aus und strömt zum Becken 2 zurück.

Im Vermischer 11 wird das Wasser, in welchem sich bereits Flocken gebildet haben, intensiv mit Ozon gemischt, wonach es seitlich aus dem Vermischer austritt und mit stark verringerter Strömungsgeschwindigkeit im Filterbett nach unten wandert. Der Vermischer, der ihn umgebende Raum im Filterbehälter und das Filterbett selbst wird als Oxidationsbereich bezeichnet. Dort reagiert das Ozon mit den organischen Wasserinhaltsstoffen und dem Bromid. Dieses wird zu desinfizierendem Hypobromit aktiviert, während gleichzeitig überschüssiges Ozon zu Sauerstoff abgebaut wird. Die Anwesenheit von Bromid und Ozon steigert die Wirkung des Flockungsmittels.

Das erreichte Höchstmaß an Aufbereitungsleistung zeigt die Fig. 2, in welcher der KMnO₄-Verbrauch in mg/l über der Zeit in Stunden aufgetragen ist. Die Wasseraufbereitungsanlage ist nach üblichen Kriterien für vier zukommende Badegäste je Stunde ausgelegt. Das Schaubild nach Fig. 2 zeigt jedoch einen Badebetrieb mit stündlich sechs hinzukommenden Personen, also 150 %iger Belastung des Badewassers von 7.00 bis 17.00 Uhr. Das Becken wurde zunächst mit Frischwasser gefüllt, das gelöste organische Substanzen entsprechend einem KMnO₄-Verbrauch von 3,2 mg/l enthält. Nach Öffnung des Bades um 7.00 Uhr steigt der KMnO₄-Verbrauch an und nimmt nach Schließung des Bades um 18.00 Uhr wieder ständig ab bis zur Erreichung des Anfangswertes. Damit ist dokumentiert, daß die gesamte anthropogene Verschmutzung durch das Aufbereitungsverfahren eliminiert worden ist. Außerdem überschreiten der THM-Gehalt zu keiner Zeit 0,01 mg/l und der Gehalt an freiem Brom zu keiner Zeit 0,5 mg/l. Der Bromgehalt ist somit auf 1/10 des bisher für erforderlich gehaltenen Wertes reduziert.

Für die Zusammensetzung des Aufbereitungs-Hilfsmittel-Gemisches, die Steuerung seiner Dosierung und die Steuerung des Ozonerzeugers werden zwei Beispiele gegeben.

### Beispiel I:

Das flüssige Aufbereitungs-Hilfsmittel-Gemisch besteht aus neun Teilen einer Polyaluminiumchlorid-Flüssigkeit mit einem Gehalt von 10,32 % Al₂O₃ und einem Teil Natriumbromid. Das entspricht einem Wirkstoffverhältnis Al₂O₃ : Br⁻ wie etwa 10 : 3.

Die Dosiermenge je Zeit bei laufender Dosiervorrichtung ist im Mittel konstant, d. h. die Hübe und die Zeitintervalle zwischen den Hüben bleiben unverändert.

Es sind zwei Schaltschwellen, nämlich für den Ozonerzeuger einerseits und für die Dosierpumpe andererseits vorgesehen. Jede Schaltschwelle hat einen oberen und einen unteren Grenzwert des Redox-Potentials. Die Grenzwerte zur Steuerung des Ozonerzeugers betragen 800 mV und 790 mV und die Grenzwerte zur Steuerung der Dosierpumpe 775 mV und 765 mV.

Die Anlage arbeitet wie folgt: Ausgehend von einem niedrigen, d. h. unter dem Grenzwert von 765 mV liegenden Redox-Potential zu Beginn des Aufbereitungsbetriebes werden der Ozonerzeuger und die Dosierpumpe eingeschaltet. Bei Erreichen des Redox-Potentials 775 mV schaltet die Dosierpumpe ab. Solange noch keine zusätzliche organische Belastung eintritt, steigt das Redox-Potential weiter an, da durch die Ozonbehandlung immer wieder neues Hypobromit entsteht. Bei Erreichen von 800 mV wird auch der Ozonerzeuger ausgeschaltet. Sinkt sodann durch die Belastung des Wassers beim Badebetrieb das Redox-Potential unter 790 mV ab, so wird zunächst der Ozonerzeuger eingeschaltet und bei weiterem Absinken (infolge starker Belastung trotz Ozonbehandlung) wird auch die Dosierpumpe bei 765 mV wieder zugeschaltet.

### Beispiel II:

Therapiebad mit einem Beckeninhalt von 30 m³, der etwa in einer Stunde einmal umgewälzt wird.

Das flüssige Aufbereitungs-Hilfsmittel ist aus Polyaluminiumchlorid und Natriumbromid derart gemischt, daß ein Wirkstoffverhältnis Al₂O₃ : Br⁻ wie etwa 1 : 1 entsteht.

Die Dosiermenge je Zeit der Dosierpumpe wird durch Veränderung der Intervalle zwischen den einzelnen Hüben in Abhangigkeit vom Redox-Potential gesteuert. Bei niedrigem Redox-Potential < 750 mV beträgt die mittlere Dosiermenge 1 ml/m³ Wasserumwälzmenge. Ab 750 mV fällt die Dosiermenge bei steigendem Redox-Potential zunächst stärker und dann langsamer ab, um bei etwa 840 mV den Wert 0,2 ml/m³ zu erreichen. Zwischenwerte sind: 0,69 ml/m³ bei 760 mV, 0,53 ml/m³ bei 770 mV und 0,36 ml/m³ bei 790 mV.

In diesem Beispiel ist nur eine einzige Schaltschwelle mit Redox-Potential-Grenzwerten von 800 mV und 790 mV vorgesehen. Fällt das Redox-Potential unter diese Schwelle ab, so werden der Ozonerzeuger und die Dosierpumpe gemeinsam eingeschaltet. Steigt dann das Redox-Potential über die Schwelle an, so wird der Ozonerzeuger ausgeschaltet, die Dosierpumpe läuft jedoch, gesteuert durch eine eigene Nachlaufeinrichtung, noch eine bestimmte Zeit, z. B. 30 Min., weiter. Dann wird auch die Dosierpumpe stillgesetzt, sofern nicht in der Zwischenzeit das Redox-Potential wieder unter die Schwelle abgesunken ist.

Es hat sich gezeigt, daß auch nach dem Abschalten des Ozonerzeugers das Redox-Potential noch längere Zeit sehr hohe Werte beibehält. Das dürfte auf einen größeren Anteil an höherwertigen Bromoxiden zurückzuführen sein. Die zeitlich begrenzte weitere Dosierung von Flockungsmittel und Bromid ohne Ozon (Nachlauf) begünstigt die Zurückführung dieser höherwertigen Bromoxide in die einwertige Form und damit die Absenkung des überhöhten Redox-Potentials auf ein wünschenswertes Niveau.

Insgesamt wird nach diesem Beispiel bezogen auf die Beckengröße und die Betriebszeit weniger Flockungsmittel und Halogen in das Wasser eingebracht, als beim vorhergehenden Beispiel.

## Patentansprüche

1. Verfahren zum Aufbereiten von in einem Kreislauf geführtem Wasser, insbesondere Badewasser und Wasser in Luftbehandlungsanlagen, wobei das Wasser mit Ozon behandelt, gefiltert und mit einem Flockungsmittel sowie einem Ozon reduzierenden Halogen, insbesondere Brom, versetzt wird, dadurch gekennzeichnet,
daß das Redox-Potential am Eingang der Aufbereitungsanlage laufend gemessen wird,
daß das Einbringen sowohl des Flockungsmittels als auch des Halogens, in der Weise vom Redox-Potential abhängig geregelt wird, daß diese Aufbereitungs-Hilfsmittel eingebracht werden, wenn das Redox-Potential sinkt,
daß die Aufbereitungs-Hilfsmittel in oder bezüglich der Strömungsrichtung vor demjenigen räumlichen Bereich der Wasserführung eingebracht werden, in welchem das Ozon mit den Wasserinhaltsstoffen reagiert und
daß das Wasser nach diesem Bereich gefiltert wird.

2. Verfahren nach Anspruch 1, dadurch gekennzeichnet, daß die Aufbereitungs-Hilfsmittel zugegeben werden, solange sich das Redox-Potential unterhalb einer Schaltschwelle befindet.

3. Verfahren nach Anspruch 2, dadurch gekennzeichnet, daß nach dem Ansteigen des Redox-Potentials über die Schaltschwelle die Aufbereitungs-Hilfsmittel noch eine bestimmte Zeit lang bei stillgesetztem Ozonerzeuger weiter zugegeben werden.

4. Verfahren nach Anspruch 1, dadurch gekennzeichnet, daß die Zugabemengen der Aufbereitungs-Hilfsmittel pro Zeiteinheit variabel sind und vom Momentanwert des Redox-Potentials abhängen.

5. Verfahren nach Anspruch 4, dadurch gekennzeichnet, daß die Zugabemengen mit steigendem Redox-Potential kleiner werden.

6. Verfahren nach Anspruch 1, dadurch gekennzeichnet, daß die einzelnen Aufbereitungs-Hilfsmittel in einem konstanten Mengenverhältnis zueinander dem Wasser beigegeben werden.

7. Verfahren nach Anspruch 6, dadurch gekennzeichnet, daß das Verhältnis der Mengen der zugegebenen Wirkstoffe Al₂O₃ und Br⁻ etwa in einem Bereich zwischen 1 : 0,3 bis 1 : 1 liegt.

8. Verfahren nach Anspruch 6, dadurch gekennzeichnet, daß eine zuvor hergestellte Mischung mehrerer Aufbereitungs-Hilfsmittel, insbesondere eine Mischung aus einem Flockungsmittel und einer Halogenverbindung, in das Wasser eingebracht wird.

9. Verfahren nach Anspruch 1, dadurch gekennzeichnet, daß auch die zur Behandlung des Wassers erzeugte Ozonmenge in Abhängigkeit vom Redox-Potential geregelt wird, wobei die Schaltschwelle für die Ozonbehandlung höher liegt als die Schaltschwelle für das Einbringen von Aufbereitungs-Hilfsmittel.

10. Verfahren nach Anspruch 1, dadurch gekennzeichnet, daß ein Flockungsmittel auf der Basis von Polyaluminiumchlorid und Tonerde (Al₂O₃) verwendet wird.

11. Verfahren nach Anspruch 10, dadurch gekennzeichnet, daß dem Flockungsmittel ein Halogen in Form von Natriumbromid beigemischt ist.

12. Hilfsmittel für die Wasseraufbereitung mit Ozon, gekennzeichnet durch ein Gemisch aus einem Teil Natriumbromid (NaBr) und fünf bis zwanzig Teilen eines handelsüblichen Polyaluminiumchlorid-Flockungsmittels (PAC), das einen Gehalt an Tonerde (Al₂O₃) von etwa 10 % aufweist.

## Claims

1. Method of processing water which is conveyed in a circuit, in particular bath water and water in air treatment plants, the water being treated with ozone, filtered and mixed with a flocculant and an ozone-reducing halogen, in particular bromine, characterized in that the redox potential is continuously measured at the inlet of the processing plant, in that the introduction both of the flocculant and of the halogen is controlled as a function of the redox potential in such way that said auxiliary processing agents are introduced if the redox potential drops, in that the auxiliary processing agents are introduced in that spatial region of the water conveyance, or upstream of that spatial region of the water conveyance, in relation to the flow direction, in which the ozone reacts with the water constituents, and in that the water is filtered downstream of said region.

2. Method according to claim 1, characterized in that the auxiliary processing agents are added as long as the redox potential is below a switching threshold.

3. Method according to claim 2, characterized in that the auxiliary processing agents still continue to be added for a specified time with the ozone generator shut down after the redox potential has risen above the switching threshold.

4. Method according to claim 1, characterized in that the amounts of the auxiliary processing agents added per unit of time are variable and depend on the instantaneous value of the redox potential.

5. Method according to claim 4, characterized in that the added amounts become smaller with increasing redox potential.

6. Method according to claim 1, characterized in that the individual auxiliary processing agents are added to the water in a constant quantitative ratio to one another.

7. Method according to claim 6, characterized in that the ratio of the amounts of the active substances A1₂O₃ and Br⁻ added are approximately in a range between 1 : 0.3 to 1 : 1.

8. Method according to claim 6, characterized in that a previously prepared mixture of a plurality of auxiliary processing agents, in particular a mixture of a flocculant and a halogen compound, is introduced into the water.

9. Method according to claim 1, characterized in that the amount of ozone generated for treatment of the water is also controlled as a function of the redox potential, the threshold switching for the ozone treatment being higher than the switching threshold for the introduction of auxiliary processing agent.

10. Method according to claim 1, characterized in that a flocculant based on polyaluminum chloride and alumina (A1₂O₃) is used.

11. Method according to claim 10, characterized in that a halogen in the form of sodium bromide is added to the flocculant.

12. Auxiliary agent for water processing with ozone, characterized by a mixture of one part of sodium bromide (NaBr) and five to twenty parts of a commercially available polyaluminum chloride flocculant (PAC) which has an alumina (A1₂O₃) content of about 10 %.

## Revendications

1. Procédé pour traiter de l'eau, circulant dans un circuit, en particulier de l'eau de bain et de l'eau dans des installations de conditionnement d'air, l'eau étant traitée par de l'ozone, filtrée, et mélangée à un agent de floculation, ainsi qu'à un halogène réduisant l'ozone, en particulier du brome,
caractérisé en ce que le potentiel d'oxydoréduction est mesuré en continu à l'entrée de l'installation de traitement, en ce que l'amenée aussi bien de l'agent de floculation que de l'halogène est réglée de façon dépendant du potentiel d'oxydoréduction, de sorte que ces adjuvants de traitement sont amenés quand le potentiel d'oxydoréduction diminue, en ce que les adjuvants de traitement sont amenés dans le sens d'écoulement ou relativement à celui-ci avant la zone spatiale du guidage de l'eau dans laquelle l'ozone réagit avec les matières contenues dans l'eau, et en ce que l'eau est filtrée après cette zone.

2. Procédé selon la revendication 1,
caractérisé en ce que les adjuvants de traitement sont fournis aussi longtemps que le potentiel d'oxydoréduction se trouve au-dessous d'un seuil de commutation.

3. Procédé selon la revendication 2,
caractérisé en ce que, après l'augmentation du potentiel d'oxydoréduction au-dessus du seuil de commutation, les adjuvants de traitement sont encore fournis pendant une durée déterminee, alors que le générateur d'ozone est à l'arrêt.

4. Procédé selon la revendication 1,
caractérisé en ce que les quantités fournies des adjuvants de traitement par unité de temps sont variables et dépendent de la valeur instantanée du potentiel d'oxydoréduction.

5. Procédé selon la revendication 4,
caractérisé en ce que les quantités fournies diminuent lorsque le potentiel d'oxydoréduction augmente.

6. Procédé selon la revendication 1,
caractérisé en ce que les adjuvants individuels de traitement sont ajoutés à l'eau dans un rapport quantitatif constant les uns par rapport aux autres.

7. Procédé selon la revendication 6,
caractérisé en ce que le rapport des quantités des additifs fournis AL₂O₃ et Br⁻ se trouve à peu près dans une plage entre 1 : 0,3 et 1 : 1.

8. Procédé selon la revendication 6,
caractérisé en ce qu'un mélange, précédemment réalisé, de plusieurs adjuvants de traitement, en particulier un mélange d'un agent de floculation et d'un composé halogéné, est amené dans l'eau.

9. Procédé selon la revendication 1,
caractérisé en ce qu'également la quantité d'ozone engendrée pour traiter l'eau est réglée de façon dépendant du potentiel d'oxydoréduction, le seuil de commutation pour le traitement par l'ozone étant plus élevé que le seuil de commutation pour l'amenée des adjuvants de traitement.

10. Procédé selon la revendication 1,
caractérisé en ce qu'un agent de floculation sur la base de polyaluminiumchlorure et d'alumine (Al₂O₃) est utilisé.

11. Procédé selon la revendication 10,
caractérisé en ce qu'un halogène sous forme de bromure de sodium est ajouté à l'agent de floculation.

12. Adjuvant pour le traitement de l'eau par de l'ozone,
caractérisé par un mélange d'une partie de bromure de sodium (NaBr) et de cinq à vingt parties d'un agent de floculation commercial à base de polyaluminiumchlorure (PAC), qui présente une teneur en alumine (Al₂O₃) d'environ 10 %.
